## Europäisches Patentamt

## European Patent Office

## Office européen des brevets

(19)

(11) Veröffentlichungsnummer: **0 369 295**
**A1**

(12) **EUROPÄISCHE PATENTANMELDUNG**

(21) Anmeldenummer: **89120611.2**

(22) Anmeldetag: **07.11.89**

(51) Int. Cl.⁵: **F16J 15/34**

(30) Priorität: **18.11.88 DE 3839106**

(43) Veröffentlichungstag der Anmeldung:
**23.05.90 Patentblatt 90/21**

(84) Benannte Vertragsstaaten:
**DE FR GB IT NL**

(71) Anmelder: **Feodor Burgmann Dichtungswerke GmbH & Co.**
**Äussere Sauerlacher Strasse 6-8**
**D-8190 Wolfratshausen 1(DE)**

(72) Erfinder: **Müller, Heinz, Prof.-Dr.-Ing.**
**Aprikosenweg 2**
**D-7050 Waiblingen(DE)**
Erfinder: **Waidner, Peter, Dr.-Ing.**
**Strassfeld 7**
**D-8021 Icking-Dorfen(DE)**

(74) Vertreter: **Empl, Karl et al**
**Patentanwälte Dipl.-Ing. K. Empl Dipl.-Ing.,**
**Dipl.-Wirtsch.-Ing. K. Fehners**
**Schumannstrasse 2**
**D-8000 München 80(DE)**

(54) **Gleitringdichtung.**

(57) Eine Gleitringdichtung mit einem mit der Welle umlaufenden Gegenring (15) in dessen die Gleitdichtfläche (17) enthaltender Stirnfläche (14) eine Mehrzahl von Nuten (20) ausgebildet sind, welche, ausgehend von ihren mit dem den geringeren Druck ($p_2$) aufweisenden Raum (7) verbundenen offenen Nutenden unter spitzen Winkeln zu durch die Wellenachse (1) gelegten radialen Geraden verlaufen, wobei ihre bezogen auf die Wellendrehrichtung hinten liegenden geschlossenen Nutenden (32) benachbart zu dem das abzudichtende Fluid enthaltenden, den größeren Druck ($p_1$) aufweisenden Raum (6) angeordnet sind, aber mit diesem Raum nur über den nutenfreien Dichtspalt in Verbindung stehen. Ausgehend vom geschlossenen Nutende (32) vergrößert die Sohlenlinie jeder Nut (20) ihren Abstand (A) zur Gleitdichtfläche (17). An einem Übergangspunkt (36) vergrößert sich der Gradient ΔA/Δs sprunghaft. Die zwischen den geschlossenen Nutenden (32) und den Übergangspunkten (36) gelegenen Nutteile minimaler Tiefe bewirken den Aufbau von die Gleitdichtfläche (17) trennenden Fluid-Druckpolstern. Die zwischen den Übergangspunkten (36) und den offenen Nutenden gelegenen Nutteile größerer Tiefe führen das Fluid zurück und hindern es am Verlassen des Dichtspaltbereichs.

FIG. 5

# Gleitringdichtung

Die Erfindung betrifft eine Gleitringdichtung zur Abdichtung einer umlaufenden Welle, welche durch eine Wandung geführt ist, die einen eine unter Druck stehende Flüssigkeit enthaltenden ersten Raum von einem geringeren Druck aufweisenden zweiten Raum trennt, mit einem drehfest an der Wandung gehaltenen und gegen diese abgedichteten ersten Ringkörper, der eine in einer zur Achse der Welle lotrechten Ebene gelegene kreisringförmige erste Stirnfläche aufweist, und mit einem drehfest an der Welle gehaltenen und gegen diese abgedichteten zweiten Ringkörper, der eine der ersten Stirnfläche zugekehrte, ebene, kreisringförmige zweite Stirnfläche aufweist, die an der ersten Stirnfläche unter Bildung gemeinsamer ringförmiger und konzentrisch zur Achse gelegener Gleitdichtflächen (Berührungsflächen) zur Anlage bringbar ist, durch welche an jeder Stirnfläche ein im ersten Raum gelegener erster Begrenzungskreis und ein im zweiten Raum gelegener zweiter Begrenzungskreis definiert ist, wobei einer der Ringkörper in Richtung der Achse verschiebbar ist, und durch wenigstens eine Feder gegen den anderen Ringkörper vorgespannt ist, aus einer der Stirnflächen mehrere gleichgeformte, voneinander getrennte und mit gleichen Winkelabständen angeordnete Nuten herausgearbeitet sind, die sich jeweils, ausgehend von einem offenen Nutende an oder jenseits des zweiten Begrenzungskreises, zwischen die Gleitdichtflächen erstrecken und mit ihrem geschlossenen Nutende einen radialen Abstand zu dem ersten Begrenzungskreis einhalten, wobei jede Nut mit einer vorderen Längskante und einer in Bezug auf ihre Relativbewegung zu der anderen Stirnfläche hinteren Längskante in die Gleitdicht fläche übergeht, und die hintere Längskante jeder Nut unter einem spitzen Winkel zu durch die Achse gehenden radialen Geraden verläuft und sich mit einem an das geschlossene Nutende angrenzenden Teil ihre Länge in Radialrichtung mit einem an das offene Nutende angrenzenden Teil der Länge der vorderen Längskante der in Bezug auf die Relativbewegung nachfolgenden Nut überdeckt, wobei sich die Querschnittsfläche jeder Nut, bezogen auf zur Achse parallele und zur hinteren Längskante lotrechte Schnittebenen, vom geschlossenen Nutende zum offenen Nutende vergrößert und die in diesen Schnittebenen jeder Nut den größten Abstand zu einer durch die Gleitdichtfläche gelegten Bezugsebene ausweisenden Punkte deren Sohlenlinie bzw. Sohlenfläche definieren und wobei durch eine relative Drehbewegung der beiden Ringkörper in die Nuten eingedrungenes Fluid von den offenen zu den geschlossenen Nutenden gefördert und zwischen die Gleitdichtflächen unter Ausbildung von diese trennenden Druckpolstern eingeschleppt wird.

Bei einer derartigen bekannten Gleitringdichtung (EP-PS 0 037 210) sollen die Nuten aus einem Raum niedrigeren Drucks eine Förderwirkung zu einem Raum höheren Drucks ausüben. Dabei ist der Raum niedrigeren Drucks mit dem gleichen Fluid ausgefüllt, wie es in dem Raum höheren Drucks ansteht. Es ist daher möglich, daß die Nuten das von dem Raum höheren Drucks als Lekkage in den Raum niedrigeren Drucks übergetretene Fluid, das den Dichtspaltbereich bereits verlassen hat, aus dem Raum niedrigeren Drucks wieder aufnehmen. Wird dagegen die Gleitringdichtung, wie erfindungsgemäß vorgesehen, dazu verwendet, eine unter Druck stehende Flüssigkeit am Austritt in die freie Atmosphäre (oder ein Vakuum) zu verhindern, so besteht nicht die Möglichkeit, die einmal aus dem Dichtspaltbereich ausgetretene Flüssigkeit mittels der Nuten wieder zurückzufördern.

Bekannt sind ferner Vorschläge, eine Leckage bereits im Dichtspaltbereich aufzufangen und wieder zurückzufördern, wobei aber komplex strukturierte und daher nur aufwendig zu fertigende Gleitdichtflächen erforderlich sind.

Aufgabe der Erfindung ist es, eine Gleitringdichtung zu schaffen, welche minimale Reibungsverluste im Dichtspalt aufweist und bei kostengünstiger Herstellbarkeit eine nahezu vollständige Rückförderung einer flüssigen Leckage erlaubt, auch wenn der niederdruckseitige Raum nicht von der Lekkageflüssigkeit ausgefüllt ist.

Diese Aufgabe wird, ausgehend von einer Gleitringdichtung der eingangs genannten Art dadurch gelöst, daß der Abstand der Sohlenlinie bzw. Sohlenfläche zur Bezugsebene sich vom geschlossenen Nutende zum offenen Nutende vergrößert, und daß beim Fortschreiten auf der Sohlenlinie bzw. auf der Sohlenfläche in Richtung zum offenen Nutende hin sich der Wert des Gradienten $\Delta A / \Delta s$ (die Änderung $\Delta A$ des Abstands beim Fortschreiten auf der Sohlenlinie um eine kleine Distanz $\Delta s$) an mindestens einer Stelle verändert.

Aufgrund dieser Ausbildung besitzt die Nut einen an das geschlossene Nutende angrenzenden, zwischen dem Grund der Nut (Sohle) und der Gleitfläche des Ringkörpers (im folgenden als Gegenring bezeichnet) eine veränderli che, jedoch verhältnismäßig geringe Tiefe aufweisenden Teil, in welchem sich bei relativer Drehung der beiden Gleitflächen der Druck der in die Nut eingedrungenen Flüssigkeit erhöht. Der die geringe Tiefe aufweisende Teil der Nut der erfindungsgemäßen Gleitringdichtung wird als Rückförderteil bezeichnet. Die Druckerhöhung im Rückförderteil entsteht dadurch, daß infolge Adhäsion der Flüssigkeit an den Gleitdichtflächen die vom genuteten, rotierenden Gegenring mitgeschleppte Flüssigkeit an der ruhenden, glatten Gleitdichtfläche des Gleitrings abgebremst und deshalb an der schräg zur tangentialen Bewegungsrichtung liegenden hinteren Nut-Seitenwand des Rückförderteils aufgestaut wird. Infolgedessen entsteht in an sich bekannter Weise ein die Gleitdichtflächen trennendes sogenanntes Druckpolster. Der gegenüber dem Druck $p_1$ der abzudichtenden Flüssigkeit erhöhte Flüssigkeitsdruck in der Nut bewirkt, daß die in die Nut eingedrungene Flüssigkeit in der Nähe der hinteren Nut-Seitenwand durch den engen Spalt zwischen den Gleitdichtflächen in den abzudichtenden flüssigkeitsgefüllten Raum zurückfließt.

Wegen der übergeordneten Aufgaben, nämlich einerseits die Reibungsverluste der Gleitringdichtung so klein wie möglich zu halten und andererseits die bei veränderlichem Füllungsgrad der Nut auftretenden Spaltänderungen zu minimieren, wird erfindungsgemäß der Rückförderteil unter Berücksichtigung der zur Rückförderung notwendigen Druckbildung so klein wie möglich ausgeführt.

Um zu verhindern, daß vom abzudichtenden flüssigkeitsgefüllten Raum aus durch den Spalt zwischen den Gleitdichtflächen über den Rückförderteil hinaus vorgedrungene Flüssigkeit als Leckage nach außen strömt, d. h. den Dichtspaltbereich endgültig verläßt, wird diese wieder zum Rückförderteil zurückgeführt. Hierzu dient erfindungsgemäß ein an den Rückförderteil der Nut angrenzender, als Rückführteil bezeichneter Teil der Nut. Die Rückführung der Flüssigkeit wird dadurch bewirkt, daß infolge der relativen Drehbewegung Flüssigkeit mitgeschleppt und an der schräg zur tangentialen Bewegungsrichtung liegenden hinteren Nut-Seitenwand des Rückführteils zum Rückförderteil hin umgelenkt wird. Die Rückführung der Flüssigkeit erfolgt, ohne daß die Reibung dabei erhöht, und ohne daß die Spaltstabilität nachteilig beeinflußt wird. Dies geschieht, indem der Rückführteil erfindungsgemäß eine wesentlich größere Nuttiefe aufweist, als der Rückförderteil. Infolgedessen wird die Flüssigkeit im Rückführteil von der rotierenden Gleitfläche mitgeschleppt, ohne daß dabei zusätzlich ein nennenswerter Druck induziert wird, dessen Änderung die Wirkung der "Druckpolster" beeinflussen würde.

Weitere Merkmale und Vorteile der Erfindung ergeben sich aus den Unteransprüchen und der nachstehenden beispielsweisen Beschreibung von Ausführungsformen der Erfindung anhand der Zeichnungen. In den Zeichnungen zeigen

Fig. 1 einen Längsschnitt durch eine vollständige Gleitringdichtung, zutreffend für alle Ausführungsformen;

Fig. 2 einen vergrößerten Teil-Schnitt gemäß der Linie II-II in Fig. 1 einer ersten Ausführungsform;

Fig. 3 einen weiter vergrößerten Teil-Schnitt entsprechend Fig. 2 der ersten Ausführungsform;

Fig. 4 einen Teil-Schnitt gemäß der Linie IV-IV in Fig. 3 der ersten Ausführungsformen;

Fig. 5 einen Teil-Schnitt gemäß der Linie V-V in Fig. 3 der ersten Ausführungsform;

Fig. 6 bis 8 jeweils Teil-Schnitte, geführt in zur Achse der Gleitringdichtung parallelen und zur hinteren Nut-Längskanten lotrechten Schnittebenen (näherungsweise gemäß IV-IV in Fig. 5) von sich hinsichtlich des Nuten-Querprofils von der ersten Ausführungsform unterscheidenden weiteren Ausführungsformen und

Fig. 9 bis 13 jeweils Teil-Schnitt längs der Sohlenlinie der Nut (näherungsweise gemäß IV-IV in Fig. 5) von sich hinsichtlich des Nut-Längsprofils von der ersten Ausführungsform unterscheidenden weiteren Ausführungsformen.

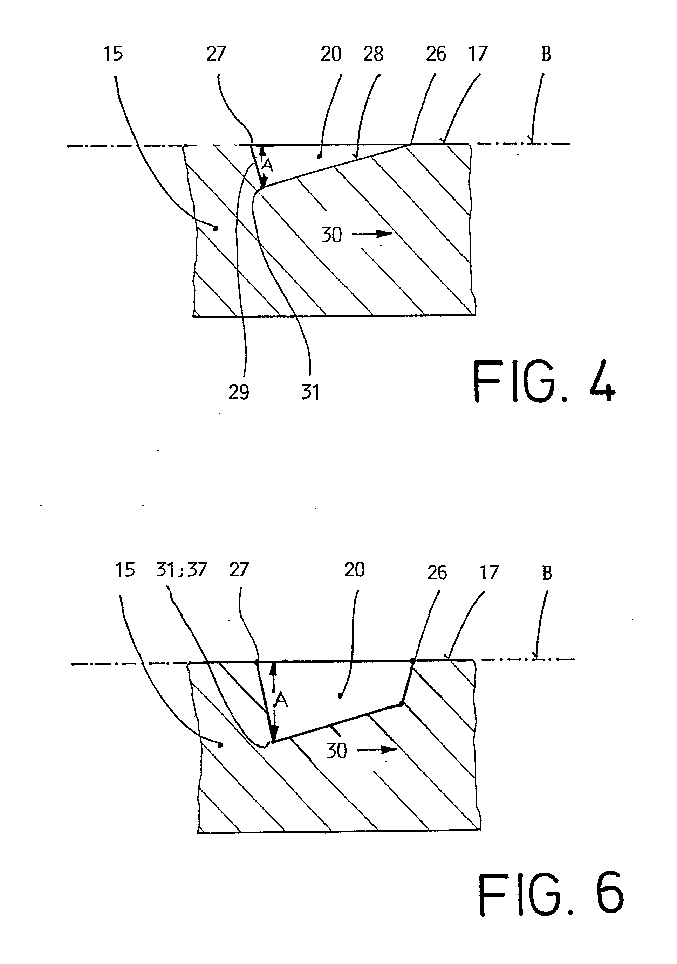

In den Figuren 4 bis 13 ist die Nut zur besseren Veranschaulichung mit wesentlich größerer Tiefe dargestellt, als es den tatsächlichen Verhältnissen entspricht, d. h. hinsichtlich der Nut ist der Maßstab in der Vertikalrichtung der Zeichnung wesentlich größer als in der Horizontalrichtung (Ebene durch Gleitdichtfläche).

Die um ihre Achse 1 umlaufende Welle 2 erstreckt sich durch die Bohrung 3 in einer stirnseitigen Wandung 4 eines Dichtungsgehäuses 5. Die Wandung 4 trennt einen ersten Raum 6, welcher eine Flüssigkeit unter einem Druck $p_1$ enthält, von einem zweiten Raum 7, dessen Druck $p_2$ geringer als der Druck $p_1$ ist, und der ein gasförmiges Fluid enthält oder ein Vakuum aufweist. Im Bereich der Bohrung 3 steht von der Wandung 4 ein rohrförmiger Kragen 8 zum ersten Raum 6 vor, auf dessen zylindrischer äußerer Umfangsfläche ein Trägerring 9 axial verschieblich angeordnet und durch einen O-Ring 10 abgedichtet ist. Ein an der Wandung 4 fester achsparalleler Stift 11 steht in eine Sacklochbohrung des Trägerringes 9 ein und hindert diesen an einer Verdrehung. Eine Mehrzahl von Schraubendruckfedern 12 spannt den Trägerring 9 axial in Richtung zum ersten Raum 6 vor. Ein fest mit dem Trägerring 9 verbundener erster Ringkörper bildet den Gleitring 13, welcher eine dem ersten Raum 6 zugekehrte, zur Achse 1 konzentrisch angeordnete kreisringförmige erste Stirnfläche aufweist, die in einer zur Achse 1 lotrechten Ebene liegt und völlig eben ist, d. h. weder Nuten noch eine anderweitig strukturierte Oberfläche besitzt.

Diese erste Stirnfläche ist mittels der von den Federn 12 und der auf den Gleitring einwirkenden hydraulischen Axialkraft gegen eine zweite, eben falls in einer zur Achse 1 lotrechten Ebene gelegene Stirnfläche 14 gepreßt, welche an einem zweiten Ringkörper, dem Gegenring 15, ausgebildet ist. Die gemeinsamen Berührungsflächen der beiden Stirnflächen ergeben die Gleitdichtflächen 16, 17, welche zwischen einem ersten Begrenzungskreis 18, an welchem der höhere Druck $p_1$ des ersten Raumes 6 ansteht und einem zweiten Begrenzungkreis 19 gelegen sind, an welchem der niedrigere Druck $p_2$ des zweiten Raumes 7 ansteht. Aufgrund der Durchmesserverhältnisse im veranschaulichten Ausführungsbeispiel entspricht die erste Stirnfläche der Gleitdichtfläche 16 am Gleitring 13. Die zweite Stirnfläche 14 ist, abgesehen von an späterer Stelle noch näher erläuterten Nuten 20, eben.

Der Gegenring 15 stützt sich mit seiner von der zweiten Stirnfläche 14 abgekehrten anderen axialen Stirnfläche an einem von einer Wellenhülse 21 radial nach außen vorstehenden Kragen 22 ab und wird gegen diesen mittels einer Druckhülse 23 vorgespannt. Ein achsparalleler Stift 25, der in Sacklochbohrungen des Kragens 22 und des Gegenringes 15 einsteht, bewirkt eine Drehmomentübertragung. Die Welle 2 ist gegen die damit fest verbundene Wellenhülse 21 und diese wiederum gegen den Gegenring 15 durch O-Ringe abgedichtet, welche in Ringnuten der Wellenhülse angeordnet sind.

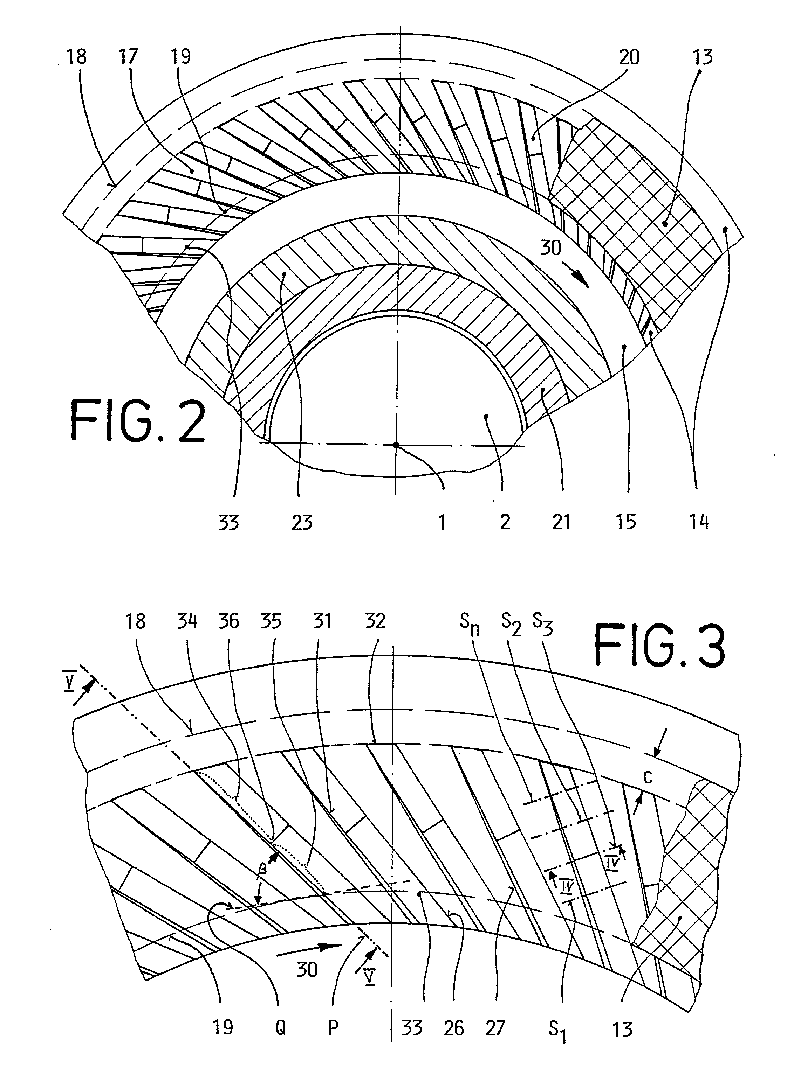

Eine in den Fig. 2 bis 5 näher veranschaulichte erste Ausführungsform der Nuten 20 weist näherungsweise zueinander parallele Längskanten 26, 27 auf, mit denen die Nut-Seitenwände 28, 29 in die Stirnfläche 14 und die darin enthaltene Gleitdichtfläche 17 übergehen. Dabei wird bei der Erläuterung der Erfindung als vordere Längskante 26 diejenige angesehen, welche beim Umlauf der Welle 2 in der durch einen Pfeil angegebenen, betriebsmäßig vorgesehenen Drehrichtung 30 und der sich dadurch ergebenden Relativbewegung der beiden Gleitdichtflächen 16, 17 zuerst einen gedachten festen Punkt an der ersten (stationären) Gleitdichtfläche 16 passiert. Jede Nut 20 hat in Schnittebenen $S_1 - S_n$ (von denen eine in Fig. 4 gezeigt ist), die jeweils parallel zur Achse 1 und lotrecht zur hinteren Längskante 27 geführt sind, die Form eines nicht-gleichschenkligen, wenigstens angenähert rechtwinkligen Dreiecks, dessen Hypotenuse in einer die Gleitdichtfläche 17 berührenden Bezugsebene B liegt und dessen längere Kathete von der vorderen Längskante 26 ausgeht. Die Nut-Seitenwände 28, 29 treffen sich somit in einer Sohlenlinie 31, welche die Punkte der Nut 20 verbindet, die den größten Abstand A zur Bezugsebene B haben. Die hintere Längskante 27 ist, wie auch bei den anschließend erläuterten anderen Ausführungsformen, vorteilhaft nicht scharfkantig geformt, sondern bildet einen kontinuierlichen Übergang von der hinteren Nut-Seitenwand 29 zur Gleitdichtfläche 17.

Alle Nuten 20 sind gleich geformt und sind in gleichen Winkelabständen zueinander an der Stirnfläche 14 des Gegenrings 15 angeordnet. Jede Nut weist ein (unter Mitwirkung der Gleitdichtfläche 16 des Gleitrings 13) geschlossenes Nutende 32 auf, das einen Abstand C von weniger als 2 Millimeter zum ersten Begrenzungskreis 18 einhält. Das geschlossene Nutende ist daher benachbart zu dem den höheren Druck $p_1$ aufweisenden, mit Flüssigkeit gefüllten Raum 6 angeordnet, steht mit diesem Raum aber nicht in Verbindung, abgesehen von einem Leckageweg in dem zwischen den beiden Gleit dichtflächen 16, 17 gebildeten Dichtspalt. Ausgehend von diesem geschlossenen Nutende 32 erstreckt sich die Nut 20 über die Gleitdichtfläche 17 zu ihrem am zweiten Begrenzungskreis 19 gelegenen offenen Nutende 33, d. h. das Innere der Nut erhält eine Verbindung mit dem den niedrigeren Druck $p_2$ aufweisenden gasgefüllten Raum 7. Die Nut 20 verlängert sich über den zweiten Begrenzungkreis 19 hinaus bis zum radial inneren Umfang der Stirnfläche 14.

Jede Nut 20 ist so angeordnet, daß eine zur Achse 1 parallele Nutlängs-Ebene P, welche durch ihre Sohlenlinie 31 gelegt ist, einen Winkel $\beta$ in einem Bereich von 10° bis 60° mit einer Tangentialebene Q einschließt, welche zur Achse 1 parallel verläuft und den zweiten Begrenzungskreis 19 an der Schnittstelle mit der Ebene P tangiert. Die Nuten 20 sind ferner vorteilhaft so angeordnet und geformt, daß ein vom offenen Nutende 33 ausgehender und sich in Richtung auf das geschlossene Nutende 32 erstreckender Teil der hinteren Längskante 27 einer Nut radial außen von einem vom geschlossenen Nutende ausgehenden Teil der vorderen Längskante 27 der im Bezug auf die Relativbewegung der Gleitdichtfläche 17 zur Gleitdichtfläche 16 nachfolgenden Nut überdeckt wird.

Die Sohlenlinie 31 jeder Nut 20 setzt sich aus zwei Sohlenlinien-Abschnitten 34, 35 zusammen, welche jeweils aus geraden Linien bestehen und sich in einem zwischen dem geschlossenen und offenen Nutenden 32, 33 gelegenen Übergangspunkt 36 treffen. Der innere Sohlenlinien-Abschnitt 34 geht am geschlossenen Nutende 32 von der Gleitdichtfläche 17 aus und schließt mit der Bezugsebene B einen Winkel $\alpha_1$ von 0,03° bis 0,3° ein.

Der dem zweiten Begrenzungskreis 19 benachbarte äußere Sohlenlinien-Abschnitt 35 schließt mit der gleichen Bezugsebene einen Winkel $\alpha_2$ ein, der größer als der Winkel $\alpha_1$ ist und so gewählt ist, daß der lotrecht zur Bezugsebene B gemessene Abstand $A_e$ an dem durch den zweiten Begrenzungskreis 19 definierten offenen Nutende 33 mehr als zehnfach so groß ist, als der Abstand $A_a$ am Übergangspunkt 36.

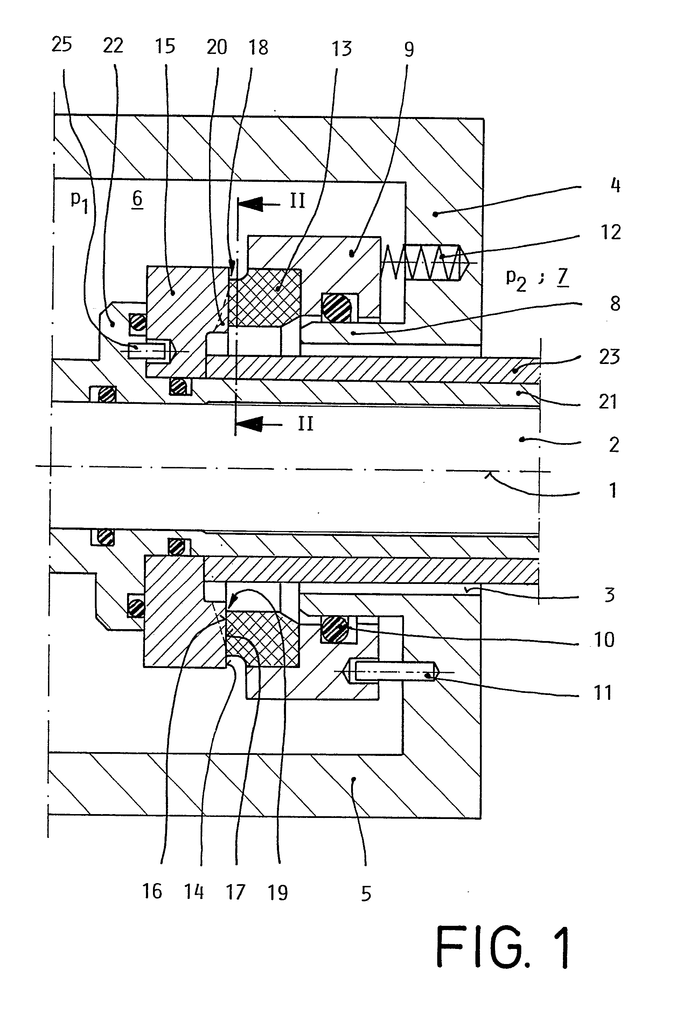

In der folgenden Beschreibung weiterer Ausführungsformen der Erfindung wird hinsichtlich der unverändert bleibenden und daher nicht erläuterten Bestandteile auf die Beschreibung der ersten Ausführungsform gemäß Fig. 1 - 5 verwiesen.

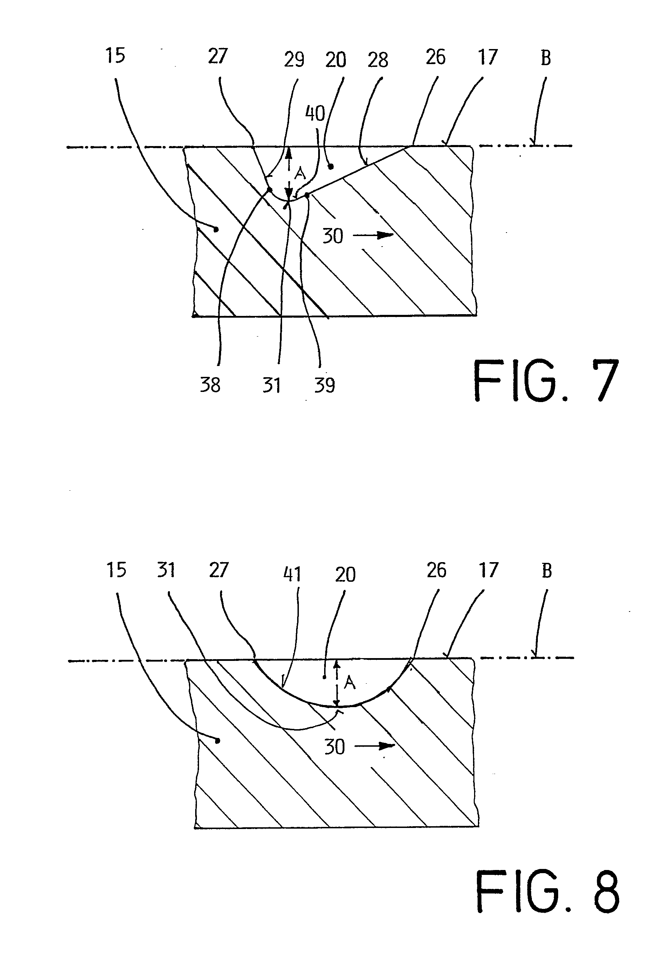

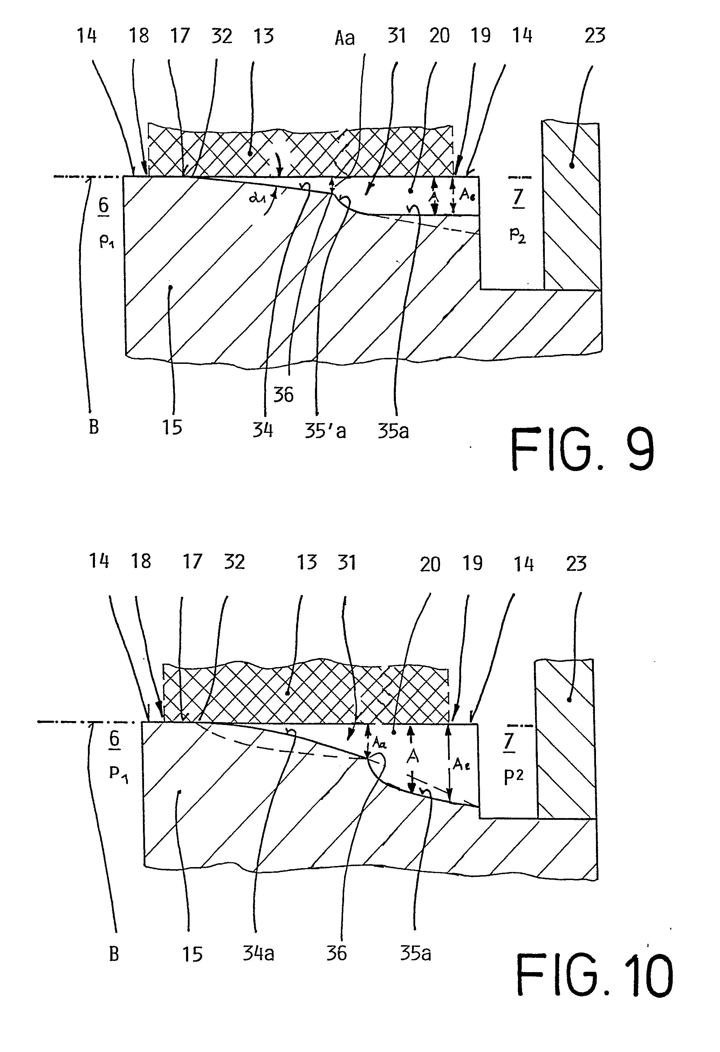

Die weiteren Ausführungsformen der Erfindung unterscheiden sich von der ersten dadurch, daß die Nuten 20 eine andere Formgebung hinsichtlich ihres Querprofils (Fig. 6 - 8) und/oder ihres Längsprofils (Fig. 9 - 13) aufweisen.

In der Ausführungsform gemäß Fig. 6 besitzen die Nuten 20 in Schnittebenen, welche parallel zur Achse 1 und lotrecht zur hinteren Nut-Längskante geführt sind, die Form eines unregelmäßigen Polygonzugs mit vier Seiten, von denen die eine in der Bezugsebene B liegt, während sich ein Eckpunkt 37 in der Sohlenlinie 31 befindet.

Gemäß weiteren Ausführungsformen können Eckpunkt 38, 39 des Polygonzugs anstelle durch eine Gerade auch durch eine gekrümmte Linie 40 verbunden sein (vgl. Fig. 7), bzw. die Querschnittform ist durch einen Kreisabschnitt 41 gegeben, dessen Sehne in der Bezugsebene B liegt (Fig. 8).

Bei der in Fig. 9 dargestellten Ausführungsform der Nut 20 ist der innere Sohlenlinien-Abschnitt 34 wie in der ersten Ausführungsform gemäß Fig. 1 - 5 ausgebildet, d. h. er bildet eine Gerade. Der äußere Sohlenlinien-Abschnitt 35a verläuft auf einem beiderseits des zweiten Begrenzungskreises 19 gelegenem Teil ebenfalls geradlinig, aber im wesentlichen parallel zur Bezugsebene B und geht mit einem konkavgekrümmten Teil in den Übergangspunkt 36 über, an den sich der innere Sohlenlinien-Abschnitt 34 anschließt. Die Nut 20 läßt sich (wie auch die Nut der ersten Ausführungsform) einfach durch einen Schleifvorgang fertigen, bei dem die Schleifscheibe lediglich in zwei geradlinigen Vorschubbewegungen zu führen ist, wobei beim äußeren Sohlenlinien-Abschnitt 35a der konkavgekrümmte Teil 35´a durch den Auslauf der Schleifscheibe gebildet wird und daher Teil eines Kreises ist, dessen Durchmesser demjenigen der Schleifscheibe entspricht.

Bei der in Fig. 10 dargestellten Ausführungsform der Nut 20 entspricht der äußere Sohlenlinien-Abschnitt 35a im wesentlichen dem entsprechenden Abschnitt der Fig. 9, wobei aber der geradlinig verlaufende Teil unter einem spitzen Winkel zur Bezugsebene B geführt ist. Der innere Sohlenlinien-Abschnitt 34a hat wenigstens in dem an das geschlossene Nutende 32 angren zenden Bereich die Form einer konvexgekrümmten Linie. Der Winkel $\alpha_1$ ist Null. Modifikationen für die Formgebung der beiden Sohlenlinien-Abschnitte sind in Fig. 10 mit unterbrochenen Linien veranschaulicht.

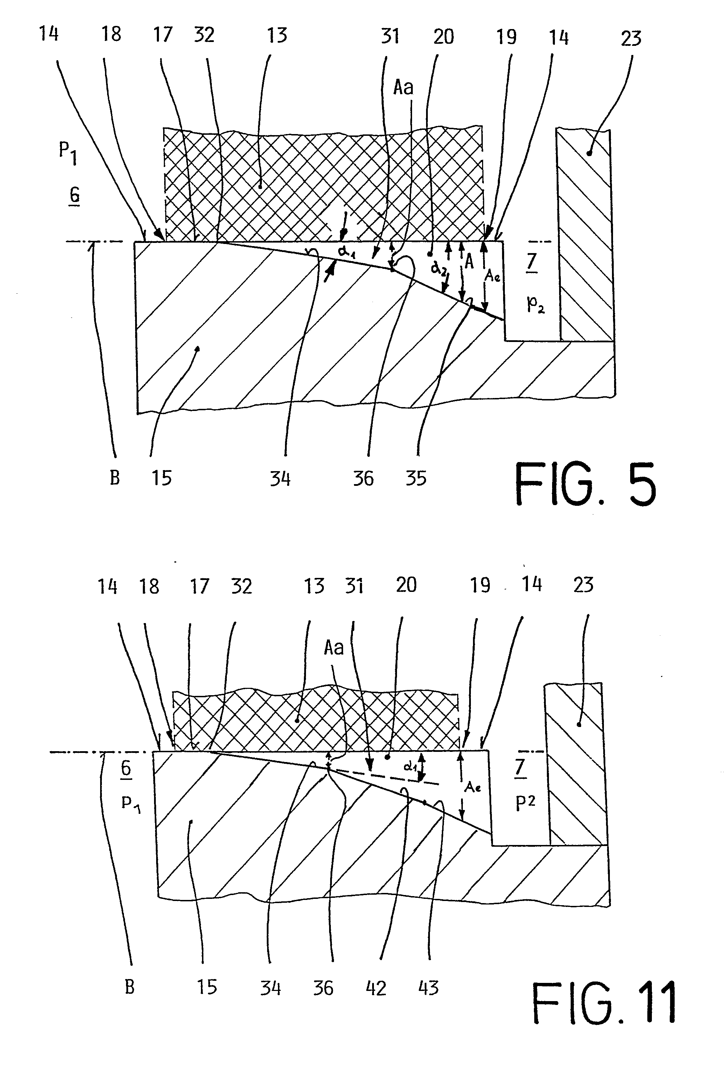

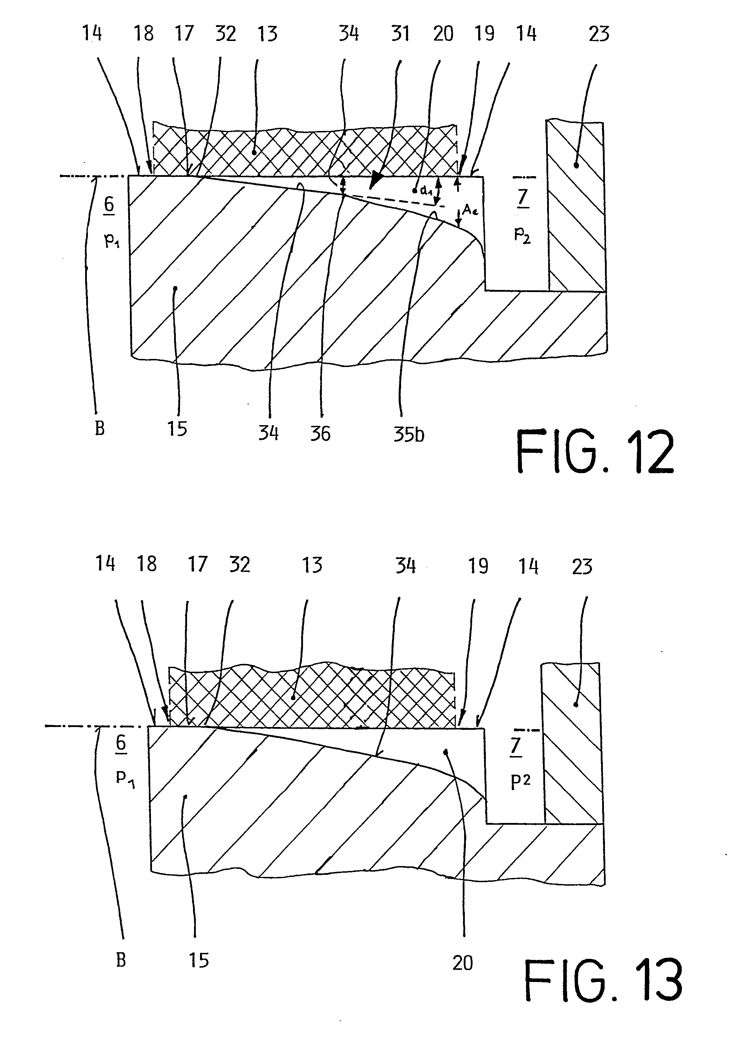

Die Ausführungsform gemäß Fig. 11 entspricht im wesentlichen derjenigen gemäß Fig. 5, wobei jedoch der äußere Sohlenlinien-Abschnitt durch zwei winkelig aneinandergrenzende, jeweils gerade Teilabschnitte 42, 43 gebildet ist.

Die Ausführungsform gemäß Fig. 12 entspricht hinsichtlich des als Gerade ausgebildeten Sohlenflächen-Abschnitts 34 den Ausführungsformen nach Fig. 5, 9 und 11 und hinsichtlich des konvexgekrümmten Sohlenlinien-Abschnitts 35b der zu Fig. 10 vermerkten, in gestrichelten Linien veranschaulichten alternativen Ausführungsform.

In der Ausführungsform gemäß Fig. 13 verläuft die Sohlenlinie 31 mit einer durchgehenden Krümmung, geht aber am geschlossenen Nutende 32, anders als im Fall der Fig. 10, unter einem definierten, wenn auch kleinen Winkel $\alpha_1$ in die Gleitdichtfläche 17 über.

## Ansprüche

1. Gleitringdichtung zur Abdichtung einer umlaufenden Welle (2), welche durch eine Wandung (4) geführt ist, die einen eine unter Druck ($p_1$) stehende Flüssigkeit enthaltenden ersten Raum (6) von einem geringeren Druck ($p_2$) aufweisenden zweiten Raum (7) trennt, mit einem drehfest an der Wandung (4) gehaltenen und gegen diese abgedichteten ersten Ringkörper (13), der eine in einer zur Achse (1) der Welle (2) lotrechten Ebene (B) gelegene kreisringförmige erste Stirnfläche aufweist und mit einem drehfest an der Welle (2) gehaltenen und gegen diese abgedichteten zweiten Ringkörper (15), der eine der ersten Stirnfläche zugekehrte, ebene, kreisringförmige zweite Stirnfläche (14) aufweist, die an der ersten Stirnfläche unter Bildung gemeinsamer ringförmiger und konzentrisch zur Achse gelegener Gleitdichtflächen (Berührungsflächen)(16, 17) zur Anlage bringbar ist, durch welche an jeder Stirnfläche (-, 14) ein im ersten Raum (6) gelegener erster Begrenzungskreis (18) und ein im zweiten Raum (7) gelegener zweiter Begrenzungskreis (19) definiert ist, wobei einer der Ringkörper (13) in Richtung der Achse (1) verschiebbar ist und durch wenigstens eine Feder (12) gegen den anderen Ringkörper (15) vorgespannt ist, aus einer der Stirnflächen (14) mehrere gleichgeformte, voneinander getrennte und mit gleichen Winkelabständen angeordnete Nuten (20) herausgearbeitet sind, die sich jeweils, ausgehend von einem offenen Nutende (33) an oder jenseits des zweiten Begrenzungskreises (19) zwischen die Gleitdichtflächen (16, 17) erstrecken und mit ihrem geschlossenen Nutende (32) einen radialen Abstand zu dem ersten Begrenzungskreis (18) einhalten, wobei jede Nut (20) mit einer vorderen Längskante (26) und einer in Bezug auf ihre Relativbewegung zu der anderen Stirnfläche hinteren Längskante (27) in die Gleitdichtfläche (17) übergeht und die hintere Längskante (27) jeder Nut (20) unter einem spitzen Winkel zu durch die Achse (1) gehenden radialen Geraden verläuft und sich mit einem an das geschlossene Nutende (32) angrenzenden Teil ihrer Länge in Radialrichtung mit einem an das offene Nutende (33) angrenzenden Teil der Länge der vorderen Längskante (26) der in Bezug auf die Relativbewegung nachfolgenden Nut überdeckt, wobei sich die Querschnittsfläche jeder Nut (20), bezogen auf zur Achse (1) parallele und zur hinteren Längskante (27) lotrechte Schnittebenen ($S_1$ - $S_\eta$), vom geschlossenen Nutende (32) zum offenen Nutende (33) vergrößert und die in diesen Schnittebenen ($S_1$ - $S_\eta$) jeder Nut den größten Abstand (A) zu einer durch die Gleitdichtfläche (17) gelegten Bezugsebene (B) aufweisenden Punkte deren Sohlenlinie (31) bzw. Sohlenfläche definieren und wobei durch eine relative Drehbewegung der beiden Ringkörper (13, 15) in die Nuten (20) eingedrungenes Medium von den offenen (33) zu den geschlossenen Nutenden (32) gefördert und zwischen die Gleitdichtflächen (16, 17) unter Ausbildung von diese trennenden Druckpolstern eingeschleppt wird, **dadurch gekennzeichnet**, daß der Abstand (A) der Sohlenlinie (31) bzw. Sohlenfläche zur Bezugsebene (B) sich vom geschlossenen Nutende (32) zum offenen Nutende (33) vergrößert und daß beim Fortschreiten auf der Sohlenlinie bzw. auf der Sohlenfläche in Richtung zum offenen Nutende hin sich der Wert des Gradienten $\Delta A/\Delta s$ (die Änderung $\Delta A$ des Abstands (A) beim Fortschreiten auf der Sohlenlinie um eine kleine Distanz $\Delta s$) an mindestens einer Stelle im Sinne einer Zunahme verändert.

2. Gleitringdichtung nach Anspruch 1, **dadurch gekennzeichnet,** daß das Ende der Sohlenlinie (31) bzw. der Sohlenfläche am geschlossenen Nutende (32) mit der die Gleitdichtfläche (17) berührenden Bezugsebene (B) einen Winkel ($\alpha_1$) im Bereich von 0,03° bis 0,3° bildet.

3. Gleitringdichtung nach Anspruch 1, **dadurch gekennzeichnet,** daß das Ende der Sohlenlinie (31) bzw. der Sohlenfläche am geschlossenen Nutende (32) stetig in die Gleitdichtfläche (17) übergeht.

4. Gleitringdichtung nach Anspruch 1 oder 2, **dadurch gekennzeichnet,** daß die Sohlenlinie (31) durch wenigstens einen zwischen dem offenen Nutende (33) und dem geschlossenen Nutende (32) gelegenen Übergangspunkt (36) bzw. die Sohlenfläche durch wenigstens eine zwischen dem offenen Nutende und dem geschlossenen Nutende gelegene Übergangslinie in wenigstens zwei ineinander übergehende Sohlenlinien-Abschnitte (34, 35) bzw. Sohlenflächen-Abschnitte unterteilt ist, wobei mindestens der Sohlenlinien-Abschnitt (34) bzw. Sohlenflächen-Abschnitt zwischen dem geschlossenen Nutende und dem Übergangspunkt (36) eine Gerade bzw. eine Ebene ist, wobei der Übergangspunkt (36) bzw. die Übergangslinie an einer Unstetigkeitsstelle gelegen ist, an der sich der Wert des Gradienten $\Delta A/\Delta s$ ändert.

5. Gleitringdichtung nach Anspruch 1, 2 oder 3, **dadurch gekennzeichnet,** daß die Sohlenlinie (31) durch wenigstens einen zwischen dem offenen Nutende (33) und dem geschlossenen Nutende (32) gelegenen Übergangspunkt (36) bzw. die Sohlenfläche durch wenigstens eine zwischen dem offenen Nutende und dem geschlossenen Nutende gelegene Übergangslinie in wenigstens zwei ineinander übergehende Sohlenlinien-Abschnitte (34, 35) bzw. Sohlenflächen-Abschnitte unterteilt ist, wobei jeder Übergangspunkt bzw. jede Übergangsstelle an einer Unstetigkeitsstelle gelegen ist, an der sich der Wert des Gradienten $\Delta A/\Delta s$ ändert, und daß am offenen Nutende (33) der Abstand ($A_e$) der Sohlenlinie (31) von der Bezugsebene (B) mindestens den zehnfachen Wert des Abstands ($A_a$) am Übergang des vom geschlossenen Nutende (32) ausgehenden Sohlenlinien-Abschnitts (34) zum daran anschließenden Sohlenlinien-Abschnitt aufweist.

6. Gleitringdichtung nach Anspruch 1, **dadurch gekennzeichnet,** daß die Sohlenlinie (31) bzw. die Längsmittellinie der Sohlenfläche einer Nut (20) in einer zur Achse (1) parallelen Nutlängsebene (P) enthalten ist.

7. Gleitringdichtung nach Anspruch 6, **dadurch gekennzeichnet,** daß die Nutlängsebene (P) mit einer Tangentialebene (Q), welche den zweiten Begrenzungskreis (19) an seiner Schnittstelle mit der Nutlängsebene (P) tangiert und zur Achse (1) parallel verläuft, einen Win kel ($\beta$) im Bereich von 10° bis 60° bildet.

8. Gleitringdichtung nach Anspruch 1, **dadurch gekennzeichnet,** daß der radiale Abstand (C) zwischen dem ersten Begrenzungskreis (18) und dem geschlossenen Nutende (32) kleiner als zwei Millimeter ist.

9. Gleitringdichtung nach einem der Ansprüche 1 bis 8, **dadurch gekennzeichnet,** daß die Nuten (20), gesehen in zur Achse (1) parallelen und zur hinteren Längskante (27) der Nut lotrechten Schnittebenen ($S_1$ - $S_n$) die Form von unregelmäßigen Polygonzügen mit wenigstens drei Seiten aufweisen, von denen eine in der Bezugsebene (B) liegt.

10. Gleitringdichtung nach Anspruch 9, **durch gekennzeichnet,** daß die Polygonzüge wenigstens näherungsweise rechtwinklige Dreiecke sind, deren Hypotenusen in der Bezugsebene (B) liegen und deren längere Katheden von den vorderen Längskanten (26) der Nuten (20) ausgehen.

11. Gleitringdichtung nach Anspruch 9 oder 10, **dadurch gekennzeichnet,** daß mindestens zwei Eckpunkte (38, 39) des Polygonzugs durch eine gekrümmte Linie (40) verbunden sind.

12. Gleitringdichtung nach Anspruch 9, **da-**

durch gekennzeichnet, daß jede Nut (20) von zwei Seitenflächen und den Sohlenflächen-Abschnitten begrenzt ist, und daß wenigstens der vom geschlossenen Nutende (32) ausgehende Sohlenflächen-Abschnitt eben ausgebildet ist und zur Gleitdichtfläche (17) windschief so geneigt ist, daß die beiden Endpunkte seiner Verschneidungskante mit der Gleitdichtfläche auf einem Kreis liegen, dessen Zentrum die Achse (1) ist.

13. Gleitringdichtung nach einem der Ansprüche 1 bis 8, **dadurch gekennzeichnet**, daß die Nuten (20), gesehen in zur Achse (1) parallelen und zur hinteren Längskante (27) der Nut lotrechten Schnittebenen ($S_1$ - $S_n$), wenigstens auf einem Teil ihrer Länge die Form von Kreisabschnitten (41) aufweisen, deren Sehnen in der Bezugsebene (B) liegen.

14. Gleitringdichtung nach Anspruch 13, **dadurch gekennzeichnet**, daß die Wände der Nuten wenigstens auf einen Teil ihrer Länge durch Ausschnitte von Zylindermantelflächen begrenzt sind.

15. Gleitringdichtung nach Anspruch 13, **dadurch gekennzeichnet**, daß die Wände der Nuten wenigstens auf einen Teil ihrer Länge durch Ausschnitte von Kegelmantelflächen begrenzt sind.

FIG. 1

FIG.2

FIG.3

15    27        20   28      26   17      B

A

30 →

29    31

# FIG. 4

15   31;37   27        20      26   17   B

A

30 →

# FIG. 6

FIG. 5

FIG. 11

FIG. 7

FIG. 8

14  18  17  32  13  Aa  31  20  19  14  23

6
P₁

α₁

Aₑ

7
P₂

B  15  34  35'a  35a  36

# FIG. 9

14  18  17  32  13  31  20  19  14  23

6
P₁

Aₐ  A  Aₑ

7
P2

B  15  34a  36  35a

# FIG. 10

14　18　17　32　13　　34　31　20　19　14　　　23

$\dfrac{6}{p_1}$

$d_1$

$A_e$

$\dfrac{7}{p_2}$

B　　15　　　34　36　　35b

# FIG. 12

14　18　17　32　　13　　34　　19　14　23

$\dfrac{6}{p_1}$

$\dfrac{7}{p2}$

B　　15　　　　20

# FIG. 13

**Europäisches Patentamt**

# EUROPÄISCHER RECHERCHENBERICHT

Nummer der Anmeldung

EP 89 12 0611

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 964 150 (WESTINGHOUSE)<br>* Figuren 1,4; Patentansprüche *<br>--- | 1 | F 16 J 15/34 |
| A | US-A-2 623 357 (BIRMANN)<br>* Figuren 10-12; Spalte 7, Zeile 49 - Spalte 8, Zeile 48 *<br>--- | 1 | |
| A | EP-A-0 023 993 (WESTINGHOUSE)<br>* Figuren; Zusammenfassung *<br>----- | 1 | |

RECHERCHIERTE SACHGEBIETE (Int. Cl.5)

F 16 J

Der vorliegende Recherchenbericht wurde für alle Patentansprüche erstellt

| Recherchenort | Abschlußdatum der Recherche | Prüfer |
|---|---|---|
| DEN HAAG | 16-02-1990 | NARMINIO A. |